# EUROPÄISCHE PATENTSCHRIFT

(11) **EP 4 327 318 B1**
(45) Veröffentlichungstag und Bekanntmachung des Hinweises auf die Patenterteilung: **26.03.2025**
(21) Anmeldenummer: 22724435.7
(22) Anmeldetag: 20.04.2022
(51) Int. Cl.: G09B 23/28, B33Y 80/00, B33Y 50/00, B33Y 10/00, A61C 13/00, A61C 9/00, A61C 5/00, A61C 7/08

(54) **ZAHNSCHIENE ALS AUSBILDUNGSMITTEL UND VERFAHREN ZU DEREN HERSTELLUNG**
DENTAL SPLINT AS A TRAINING AID, AND PROCESS FOR MANUFACTURING SAME
ATTELLE DENTAIRE UTILISÉE EN TANT QU'AUXILIAIRE D'ENTRAÎNEMENT ET SON PROCÉDÉ DE FABRICATION

(30) Priorität: 20.04.2021 DE 102021109909
(43) Veröffentlichungstag der Anmeldung: 28.02.2024
(73) Patentinhaber: zebris Medical GmbH, 88316 Isny im Allgäu (DE)
(72) Erfinder: BRUNNER, Wolfgang, 88316 Isny (DE); KORDASS, Bernd, 17498 Neuenkirchen (DE)
(74) Vertreter: Meissner Bolte Partnerschaft mbB
(86) Internationale Anmeldenummer: PCT/EP2022/060360
(87) Internationale Veröffentlichungsnummer: WO 2022/223579

(56) Entgegenhaltungen:
- RU-U1- 196 559
- US-A- 2 657 462

## Beschreibung

Die Erfindung ist in den beigefügten Ansprüchen definiert und betrifft eine Zahnschiene als Ausbildungsmittel und ein Verfahren zu deren Herstellung.

Die Ausbildung von Zahnärzten und auch Zahntechnikern umfasst selbstverständlich praktische Ausbildungsabschnitte, in denen diagnostische Fähigkeiten und "handwerkliche" Fertigkeiten des Zahnarztes bzw. handwerkliche Fertigkeiten des Zahntechnikers herausgebildet werden. Vielfältige klinische Situationen sollen dabei möglichst realitätsnah simuliert und dem Auszubildenden die Möglichkeit geboten werden, tatsächliche Eingriffe bzw. handwerkliche Arbeiten zu üben. Üblicherweise werden Ausbildungssituatioen zum Üben in Phantomköpfen oder auch Artikulatoren eingebaut, was die realistische Situation am Patienten nur unzureichend

RU 196 559 U1 offenbart ein Modell mit Basen des Ober- und Unterkiefers aus festem, nicht schrumpfbarem Polymer mit Modellzähnen und Zahnfleisch, die den Zustand der Zähne eines Patienten simulieren. Die Modellzähne werden in die Löcher der Basen des Ober- und Unterkiefers eingesetzt, die der Form der Zähne entsprechen, und mit Hilfe von zusammenklappbaren Befestigungselementen befestigt, wobei Substitutionen und Ersatz entfernt werden können.

Für eine realistische und wirkungsvolle praktische Ausbildung werden hierin auch natürliche Personen einbezogen, deren Gebiss gewissermaßen den Übungsgegenstand bildet. Dies hat zum einen den Nachteil, dass hierbei nur Defekte oder Kiefer-Fehlstellungen diagnostiziert werden können, die bei der jeweiligen Person tatsächlich vorhanden sind. Zum anderen lassen sich am Gebiss der "Versuchsperson" nur sehr bedingt handwerkliche Manipulationen durch den Auszubildenden vornehmen.

Es besteht daher erheblicher Bedarf an einem Ausbildungsmittel für die zahnärztliche und Zahntechniker-Ausbildung, welches vielfältige diagnostische und möglichst auch handwerkliche Übungsmöglichkeiten bietet.

Zahnschienen sind ein seit Längerem bekanntes Therapiemittel in der zahnärztlichen Praxis, etwa bei Funktionsstörungen des Kiefergelenks oder zur Korrektur kieferorthopädischer Fehlstellungen von Zähnen.

Es haben sich verschiedene Herstellungsverfahren für Zahnschienen etabliert.

Zur Anfertigung wird üblicherweise zunächst ein Alginatabdruck vom Gebiss genommen. Dieser wird mit Superhartgips ausgegossen. Auf dem Modell wird mittels Tiefziehgerät eine heiße Polymerfolie gezogen. In jüngerer Zeit hat sich auch die Herstellung in einem koordinatengesteuerten Fräsverfahren etabliert, dessen Ausgangspunkt ein mit einem 3D-Scanner am oben erwähnten Gipsmodell gewonnene Datensätze des Zahnoberflächenprofils von Oberkiefer und Unterkiefer sind. In jüngster Zeit wurden auch 3D-Druckverfahren, auch bezeichnet als Additive Manufacturing, zur Herstellung von Aufbissschienen eingesetzt. Auch hierbei wird von Datensätzen ausgegangen, die durch Digitalisierung der Oberflächen von Zahnabdruckmodellen gewonnen wurden.

Gemäß der oben erwähnten Bedarfs-Situation ist es Aufgabe der Erfindung, ein vielfältig nutzbares Ausbildungsmittel für die praktische Ausbildung von Zahnärzten bzw. Zahntechnikern bereitzustellen.

Diese Aufgabe wird durch eine Zahnschiene mit den Merkmalen des Anspruchs 1 gelöst. Zweckmäßige Fortbildungen des Erfindungsgedankens sind Gegenstand der abhängigen Produktansprüche. Des Weiteren werden in Ansprüche 12,13 Verfahren zur Herstellung einer Ausbildungs-Zahnschiene bereitgestellt. Zweckmäßige Ausführungsmöglichkeiten des vorgeschlagenen Verfahrens sind Gegenstand der abhängigen Verfahrensansprüche.

Die Erfindung schließt den Gedanken einer speziell als Ausbildungsmittel konfigurierten Zahnschiene ein, die einer Träger-Person, die sich für Ausbildungszwecke bereitstellt, aufgesetzt wird, jedoch eine andere als die natürliche Zahnoberflächen-Konfiguration und Kieferstellung der Träger-Person als Ausbildungsgegenstand bietet. Die erfindungsgemäße Zahnschiene hat daher eine erste, konkave Oberfläche, die an die Zahn- und angrenzende Zahnfleischtopographie einer Träger-Person angepasst ist, und eine zweite, konvexe Oberfläche, in der mindestens Abschnitte einer Zahnoberflächen-Konfiguration ausgebildet sind, die zum Zwecke der Diagnostik, Planung und Versorgung vorbestimmte Defekte aufweist.

Dabei kann direkt im Mund einer natürlichen Person geübt werden, ohne dass die Situation der Person dauerhaft verändert wird, weil das vorgeschlagene Hilfsmittel sich unschwer wieder entfernen und somit die ursprüngliche natürliche Situation wieder herstellen lässt.

Die erfindungsgemäße Ausbildungs-Zahnschiene kann - in an sich bekannter Weise - auf dem Oberkiefer oder Unterkiefer der Träger-Person mittels eines geeigneten Klebstoffs temporär hinreichend fest fixiert werden. Alternativ kann sie mit Befestigungs-Hilfsmitteln versehen sein, die etwa ein Aufklemmen auf den entsprechenden Kiefer und somit eine ohne weiteres lösbare Fixierung ermöglichen. Dies ist insbesondere dann vorteilhaft, wenn die Ausbildungs-Zahnschiene vorrangig diagnostischen Zwecken dienen soll und keinen Manipulationen ausgesetzt ist, die einen erheblichen Krafteintrag in die Zahnschiene erfordern.

In einer ersten Ausführung sind in der zweiten Oberfläche schadhafte oder zerstörte Zähne und/oder Zahnfehlstellungen, wie etwa Lückenstände, Karies Abbrüche, Defekte und Anomalien aller Art nachgebildet. Insbesondere kann auch eine zahnlose Situation nachgebildet sein, wobei die zweite Oberfläche als Kieferkamm ausgebildet ist. Hierbei kann die Oberfläche in einer besonderen Ausführung aus einem elastischem Material gebildet sein.

In einer zweiten, mit der ersten kombinierbaren Ausführung ist die zweite Oberfläche so ausgebildet, dass sie mindestens Anzeichen einer Kiefer-Fehlstellung bzw. Aufbissfehlstellung bei einer Dysgnathie oder craniomandibulären Dysfunktion der Träger-Person nachbildet.

In weiteren Ausführungen sind auf der zweiten Oberfläche nur einzelne Zähne nachgebildet, die insbesondere aus einem mit Dentalinstrumenten bzw. -geräten bearbeitbaren Material, wie etwa einem Hartkunststoff, einzeln gefertigt und auf einem Zahnschienen-Träger befestigt sein können.

In einer weiteren Ausführung handelt es sich bei der Zahnschiene um eine Unterkiefer-Schiene zur Fixierung auf dem Patienten-Unterkiefer, wobei die Zahnoberflächen-Konfiguration auf der zweiten Oberfläche auf Grundlage des totalen Zahnoberflächenprofils des Patienten-Unterkiefers konturiert ist. In einer hierzu alternativen Ausführung handelt es sich um eine Oberkiefer-Schiene zur Fixierung auf dem Patienten-Oberkiefer, wobei die Zahnoberflächen-Konfiguration auf der zweiten Oberfläche auf Grundlage des totalen Zahnoberflächenprofils des Patienten-Oberkiefers konturiert ist. Es ist jeweils die natürliche Gebisssituation eines Kiefers in der Zahnoberflächen-Konfiguration der Aufbisssschiene in den wesentlichen Teilen kopiert.

Unter Material- und Herstellungsaspekten ist die Zahnschiene in einer ersten Ausführung ausgebildet aus einem Hartkunststoff mit eingefrästen Zahnoberflächen-Konfigurationen auf der ersten und zweiten Oberfläche.

In einer alternativen Ausführung ist die Zahnschiene gefertigt aus einem verschmolzenen thermoplastischen Pulver oder Granulat oder lichthärtenden Flüssigpolymeren, wobei die Zahnoberflächen-Konfigurationen auf der ersten und zweiten Oberfläche durch additive Formgebung ausgebildet sind.

In einer weiteren alternativen Ausführung ist die Zahnschiene gefertigt aus einer thermoplastischen Folie, wobei die Zahnoberflächen-Konfigurationen auf der ersten und zweiten Oberfläche durch eine Druck-/Hitze-Formungsvorgang und optional mittels eines aufgesetzten, durch ein Fräsverfahren oder additive Formgebung gefertigten Anpassungselementes auf mindestens einer der ersten und zweiten Oberfläche gebildet sind.

Vorgeschlagen wird des Weiteren ein Satz von Zahnschienen, umfassend mindestens eine Unterkiefer-Schiene und eine Oberkiefer-Schiene, wobei die Unterkiefer-Schiene und Oberkiefer-Schiene derart aufeinander abgestimmt konfiguriert sind, dass sie eine Kiefer-Fehlstellung bzw. craniomandibuläre Dysfunktion nachbilden.

Es wird darauf hingewiesen, dass ein Zahnschienen-Satz auch mehrere Unterkiefer-Schienen und/oder mehrere Oberkiefer-Schienen umfassen kann, deren erste, konkave Oberfläche in Anpassung an die Zahnoberflächen- und angrenzende Zahnfleischtopographie derselben Träger-Person ausgeführt ist, die jedoch verschiedenartige zweite, konvexe Oberflächen haben, um verschiedenartige Zahnfehlstellungen oder schadhafte Zähne etc. und/oder Anzeichen für Kiefer-Fehlstellungen oder Kiefer-Fehlfunktionen nachzubilden. Mit einer einzigen Träger-Person können dann in vorteilhafter Weise ganz verschiedene Ausbildungssituationen realisiert werden.

Bei der Herstellung des vorgeschlagenen Ausbildungsmittels ist es von Vorteil, ohne die zeit- und kostenaufwändige Zwischenstufe der Gewinnung eines Abdrucks des Zahnoberflächenprofils und eines entsprechenden Hartgipsmodells auszukommen. Hierzu ist vorgesehen, die Zahnoberflächen intraoral mittels eines entsprechenden Intraoralscanners direkt einzuscannen. Derartige Intraoralscanner sind an sich bekannt, und ihr Einsatz ist u. a. in Schutzrechtsveröffentlichungen der Anmelderin beschrieben, so etwa in DE 10 2014 111 643 A1.

Entsprechende technische Ausgereiftheit und Genauigkeit vorausgesetzt, lässt sich durch die direkte Abbildung der Zahnoberflächen zur Gewinnung von Datensätzen des Zahnoberflächenprofils die Ungenauigkeit und Fehleranfälligkeit vermeiden, die prinzipbedingt der Abformung der Zahnoberflächen mittels eines Registrats und dem weiteren Übertragungsschritt in ein hartes Modell anhaftet. Vor allem aber wird der Arbeitsaufwand zumindest im zahntechnischen Bereich, ggf. auch im zahnärztlichen Bereich, und die hierdurch bedingte Kostenlast auf die Herstellung der Zahnschiene reduziert.

Grundsätzlich kommt im Rahmen der Erfindung auch ein indirektes Scannen der Zahnoberflächen an einem Zahnabdruck in Betracht - allerdings unter Preisgabe der oben erwähnten Vorteile eines intraoralen Scannens.

Gemäß einem weiteren Verfahrensaspekt der Erfindung ist vorgesehen, dass verschiedene mögliche Lagebeziehungen bzw. Bewegungsabläufe zwischen Unterkiefer und Oberkiefer "automatisiert" unter Einsatz eines Positionsbestimmungssystems registriert werden und die bei der Positionsbestimmung gewonnen Datensätze mit den intraoral gewonnenen Zahnoberflächenprofil-Datensätzen verknüpft werden. Auch die Bestimmung der Lagebeziehung zwischen Unterkiefer und Oberkiefer in festen Gebissstellungen oder während Bewegungsabläufen ist als solche bekannt; vgl. dazu etwa die DE 10 2014 102 111 B4 der Anmelderin.

Im Kontext der vorliegenden Erfindung ermöglicht dieses Verfahren in besonders vorteilhafter Weise die Erfassung der Kieferrelationen aus einer physiologischen Öffnungsbewegung. Hierbei kann der Patient den Unterkiefer bei entspannter Schließmuskulatur schwerkraftbedingt einfach fallen lassen, ohne dass belastete oder schmerzhafte Muskeln einer Schließbewegung aktiv sind. Ziel ist dabei die Bestimmung einer für die Versuchsperson akzeptablen, physiologischen Kieferrelation, in der die Ausbildungs-Aufbissschiene zu den Gegenzähnen im Mund okkludieren bzw. einen Aufbiss herstellen kann.

Der Schritt bzw. Ablauf der Positions-/Bewegungsbestimmung kann die gleichzeitige fortlaufende intraorale Abtastung der Oberkiefer- und Unterkieferzähne, wobei die Zähne aufeinander oder einem eingebrachten Stützstift bzw. Abstandshalter gleiten, umfassen. Das Einscannen der Zahnoberflächen kann aber auch separat erfolgen. Das zur Positions-/Bewegungserfassung genutzte Messsystem arbeitet, in an sich bekannter Weise, mit Kameras und reflektierenden oder aktiven Markerelementen oder mit Ultraschallsensoren nach dem Prinzip der Laufzeitmessung oder mit Magnetsensoren oder Inertialsensoren, oder es umfasst eine Kombination der verschiedenen hier genannten Sensortypen.

Die direkte "automatisierte" Positionserfassung der Kiefer der Träger-Person während relevanter Bewegungsabläufe ist der bekannten Simulation an einem Artikulator in verschiedener Hinsicht deutlich überlegen. Insbesondere erfolgt sie in Bezug auf die spezifische Anatomie der konkreten Träger-Person und nicht an einem unspezifischen Gerät. Weiterhin lassen sich unmittelbar Datensätze gewinnen, die im Herstellungsverfahren (mit vorbestimmten Modifikationen) als Steuerdatensätze genutzt werden können. Weiterhin lässt sich die unmittelbare Gewinnung der Koordinaten-Datensätze mit Feedback der Träger-Person verknüpfen; siehe dazu weiter unten.

Herstellungsseitig können die Scan-Datensätze bzw. aufgrund der mit dem Positionsbestimmungssystem gewonnenen Daten bearbeiteten Datensätze in jedes der oben unter Vorrichtungsaspekten erwähnten Herstellungsverfahren eingespeist werden. Speziell die konkave erste Oberfläche der erfindungsgemäßen Zahnschiene kann also mittels eines abtragenden Bearbeitungsverfahrens, insbesondere eines Fräsverfahrens, aus einem Zahnschienen-Grundkörper herausgearbeitet oder mittels eines additiven Herstellungsverfahrens aus einem Materialpulver aufgebaut oder mittels eines Druck-/Hitze-Formungsvorganges einer thermoplastischen Folie geformt wird. Der (ggfs. mit Positionsdaten bearbeitete) Scan-Datensatz ist dabei jeweils der Steuerdatensatz.

Zur Ausformung bzw. zum Aufbau der den eigentlichen Ausbildungsgegenstand bildenden zweiten Oberfläche wird bevorzugt der jeweilige Scan-Datensatz einer Bearbeitung mit digitalisierten Daten vorbestimmter Defekte unterzogen. Mit dem so bearbeiteten Datensatz die konvexe zweite Oberfläche mittels des koordinatengesteuerten, abtragenden Bearbeitungsverfahrens aus dem Zahnschienen-Grundkörper herausgearbeitet oder in dem additiven Herstellungsverfahren aufgebaut oder in dem Druck-/Hitze-Formungsvorgang der thermoplastischen Folie aufgeprägt. Grundsätzlich kann aber die zweite, konvexe Oberfläche der Ausbildungs-Zahnschiene auch eine andere Topographie haben, die nicht aufgrund der tatsächlichen Zahnoberflächen- und angrenzenden Zahnfleischtopographie der Träger-Person ausgebildet ist.

Vorteile und Zweckmäßigkeiten der Erfindung ergeben sich im Übrigen aus der nachfolgenden Beschreibung eines Ausführungsbeispiels anhand der Figuren. Von diesen zeigen:
- Fig. 1A bis 1D: eine Untersicht, Draufsicht, Vorderansicht und Detail-Ansicht einer erfindungsgemäßen Ausbildungs-Zahnschiene,
- Fig. 2: eine Prinzipskizze (Funktions-Blockschaltbild) eines Systems zur Gewinnung und Nutzung intraoraler Scans der Zahnoberflächen und von zugehörigen Positionsdaten und
- Fig. 3: eine perspektivische Darstellung eines in einem solchen System einzusetzenden paraokklusalen Bügels.

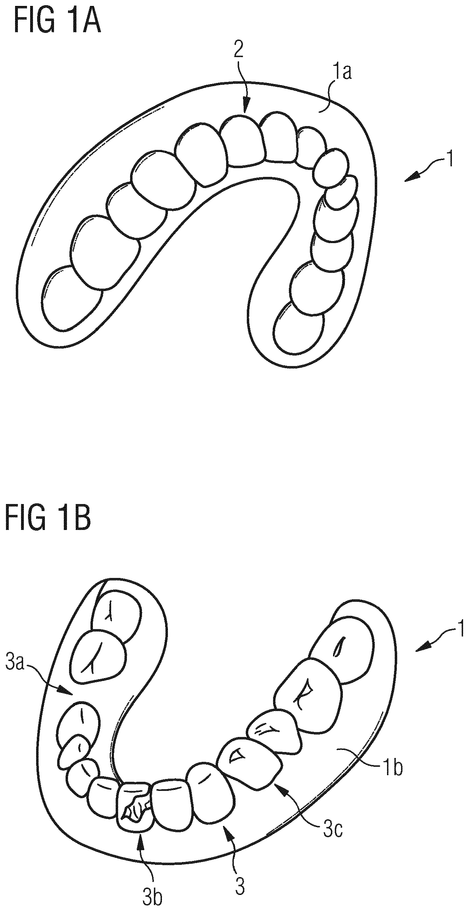

Fig. 1A zeigt eine konkave erste Oberfläche 1a einer Ausbildungs-Zahnschiene 1, in die eine Ausformungs-Konfiguration der Zahnoberflächen und angrenzenden Zahnfleischabschnitte einer Träger-Person eingeformt ist. Die Zahnschiene 1 kann gemäß einer der in den Verfahrensansprüchen spezifizierten Verfahrenslösung aufgrund eines Scans der Zahnoberflächen- und Zahnfleischtopographie des Trägers hergestellt sein und ist somit für diesen exakt angepasst.

Fig. 1B zeigt eine konvexe zweite Oberfläche 1b der Zahnschiene 1 mit einer nachgebildeten Zahnoberflächen-Konfiguration 3, in der vorbestimmte Defekte vorgesehen sind. Speziell sind hier schematisch eine Zahnlücke 3a, ein Zahnabbruch 3b an einem der Frontzähne sowie eine Zahnfehlstellung 3c dargestellt.

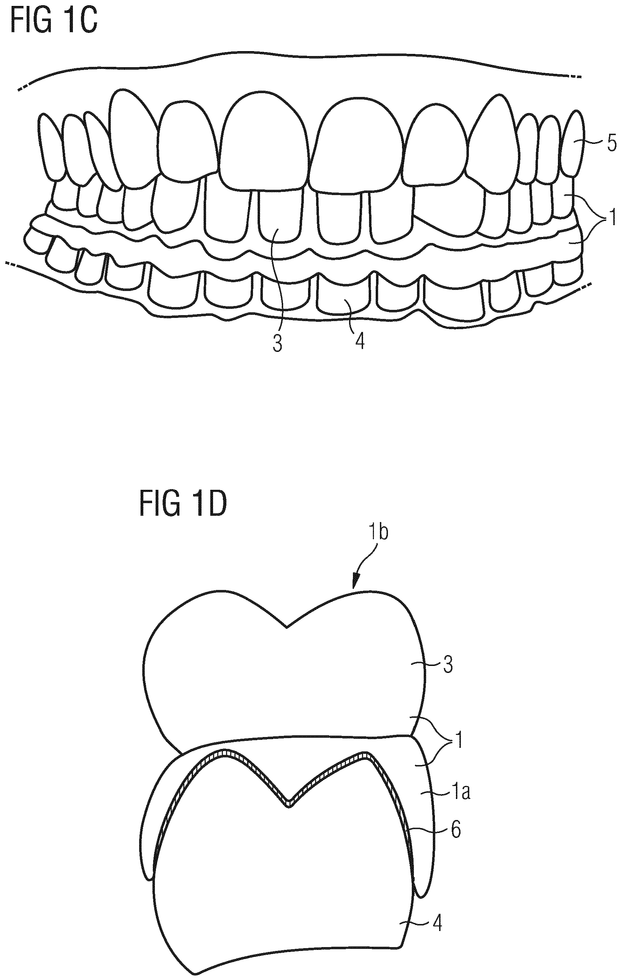

Fig. 1C und 1D zeigen die Zahnschiene 1 zwischen den natürlichen Zähnen 4 und 5 der Träger-Person bzw. im Querschnitt auf die Zähne 4 mit einem Haftmittel 6 fixiert.

Wie in den Verfahrensansprüchen und weiter oben erwähnt, kann die Zahnoberflächen-Konfiguration 3 auf der zweiten Oberfläche der Zahnschiene grundsätzlich aufgrund der Scan-Daten des Trägers erzeugt werden, wobei für die Ausformung der zweiten Oberfläche geeignete Daten der vorbestimmten Zahndefekte mit dem Scan-Datensatz kombiniert werden. Die Konfiguration auf der zweiten Oberfläche kann aber auch unabhängig vom Scan-Datensatz der Zahnoberflächentopographie des Trägers in ihrer Gesamtheit erzeugt werden, oder es können auf eine geometrisch undefinierte Basis-Oberfläche der zweiten Oberfläche einzelne Zahn-Nachbildungen aufgesetzt sein.

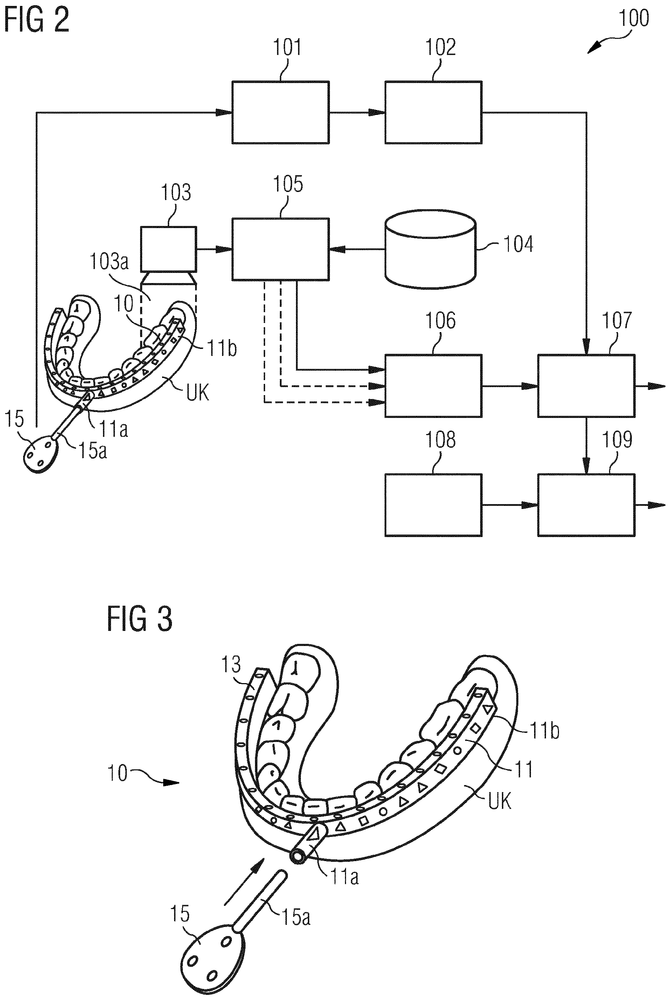

Fig. 2 zeigt als Prinzipskizze wesentliche Teile eines Systems 100 zur Bewegtbild-Erfassung/-Darstellung des Gebisses eines Patienten unter Einsatz eines speziellen paraokklusalen Bügels 10, wie in Fig. 3 skizzenartig gezeigt.

Das System umfasst eine Positionssignal-Erfassungseinheit 101 und eine Positionsberechnungseinheit 102, die die Positionssignale von einem Positionsmarker-Teil 15 des Bügels 10 in seinem in den Mund eines Patienten eingesetzten Zustand auswerten. Ergebnis ist ein Positionsdatensatz des Bügels, der genau diejenige Position des Bügels bezüglich eines raumfesten Koordinatensystems repräsentiert, in der Scans des Unter- und/oder Oberkiefers erzeugt wurden.

Mittels eines intraoralen Scanners 103 werden in einem durch den Erfassungsbereich 103a des Scanners festgelegten Teilbereich der Gesamterstreckung des Bügels die Zahnoberflächen optisch erfasst, und der zugehörige Bilddatensatz wird gespeichert. Er umfasst Bilddaten der (in dieser Figur nicht vollständig dargestellten) Markierungen an den Rändern des Kopplungslöffels, die im Erfassungsbereich 103a liegen. Aus einer Datenbasis 104 wird ein vorab erzeugter und gespeicherter Bilddatensatz des gesamten Bügels in eine Vergleichs-Verarbeitungseinheit 105 geladen und dort einer Vergleichs-Verarbeitung mit dem Bilddatensatz des Erfassungsbereiches unterzogen. Hierbei werden die im Erfassungsbereich liegenden Markierungen als Teilmenge aller an dem Kopplungslöffel vorgesehenen Markierungen identifiziert, und aufgrund dieser Identifizierung sind der Erfassungsbereich und mithin die in diesem liegenden Impressionen positionsmäßig präzise bezüglich des Bügels 10 zuzuordnen.

Zusammen mit den zugehörigen (relativen) Positionskoordinaten gelangt das im Erfassungsbereich 103a gewonnene Abbild in eine Gesamtbild-Synthesestufe 106, in der es zusammen mit dem in anderen Teilbereichen durch den Scanner gewonnenen Abbildern (Teilbildern) unter Zugrundelegung der jeweiligen relativen Positionskoordinaten zu einem Zahnoberflächen-Gesamtbild verarbeitet wird.

Sowohl das mit den relativen Positionskoordinaten versehene Teilbild als auch das Zahnoberflachen-Gesamtbild können anhand der in der Positionsberechnungseinheit 102 gewonnenen (absoluten) Positionskoordinaten der Bissgabel auf ein raumfestes Koordinatensystem bezogen werden. In der Figur ist dies für das Zahnoberflächen-Gesamtbild dargestellt, das am Ausgang der Gesamtbild-Synthesestufe 106 bereitgestellt wird. Es wird mit den am Ausgang der Positionsberechnungseinheit 102 bereitstehenden Positionskoordinaten einer zusammenfassenden Verarbeitung in einer Bild/Koordinaten-Zuordnungsstufe 107 unterzogen. Das Ergebnis ist ein koordinatengetreues Zahnoberflächen-Gesamtbild, das in dem erfindungsgemäßen Verfahren zur Herstellung der Ausformungs-Konfiguration 2 in der ersten, konkaven Oberfläche der Zahnschiene 1 genutzt wird.

Das System 100 umfasst des Weiteren eine Speichereinheit 108, in der Bilddaten vorbestimmter Zahndefekte bzw. -fehlstellungen gespeichert sind, die vorab an Patienten aufgenommen oder auch "synthetisch" gewonnen und gespeichert wurden. Der Ausgang der Speichereinheit 108 ist mit einer Zahnoberflächendaten-Kombinationsstufe 109 verbunden, die über einen weiteren Eingang mit dem Ausgang der Bild/Koordinaten-Zuordnungsstufe 107 verbunden ist. In der Kombinationsstufe 109 werden die mit den Positionssignalen verarbeiteten Scan-Daten der Träger-Person der Zahnschiene 1 mit den die Zahndefekte bzw. -fehlstellungen charakterisierenden Daten aus der Speichereinheit 108 derart verarbeitet, dass ein die defektbehaftete Zahnoberflächen-Konfiguration 3 auf der zweiten Oberfläche 1b der Zahnschiene 1 repräsentierender Bilddatensatz gewonnen wird. Dieser wird bei der Ausformung der zweiten Oberfläche gemäß einem der in den Verfahrensansprüchen spezifizierten und weiter oben erwähnten Verfahren genutzt.

Fig. 3 zeigt den frontal auf die gesamte Zahnreihe des Unterkiefers UK eines Patienten aufgesetzten paraokklusalen Bügel 10, der an den Zähnen mittels eines vorzugsweise elastischen oder hartelastischen hinreichend haftfähigen Registriermaterials oder Klebstoffs 13 fixiert ist. In zentraler Position des Bügel-Grundkörpers 11 ist an diesem eine rechtwinklig nach vorn abstehende Montagehülse 11a angeordnet, die passfähig für einen Montagestift 15a des am Bügel-Grundkörper 11 zu befestigenden Sensorik-Teils 15 ist. Die Befestigung erfolgt bei dieser vereinfacht dargestellten Ausführung durch Einschieben des Stiftes 15a in die Hülse 11a und reibschlüssige (bzw. formschlüssig) Fixierung des Stiftes in der Hülse. Zweckmäßigerweise ist in der Praxis die Stift-Hülse-Anordnung mit Ausformungen zur Vorgabe einer definierten Winkellage des Sensorik-Teils 15 bezüglich des Bügel-Grundkörpers 11 (etwa einer Nut-FederAnordnung) versehen, die aber in der Figur nicht gezeigt ist.

An der Oberseite und Vorderseite des Bügel-Grundkörpers 11 sind unterschiedliche Markierungen 11b vorgesehen, die für einen intraoralen Scanner leicht lesbar und bei der Auswertung eines Scans leicht unterscheidbar sind. Die Markierungen, die hier als unterschiedliche Symbole dargestellt sind, aber auch farbig oder als Erhöhungen/Vertiefungen o.ä. ausgebildet sein können, erlauben es, bei einem Scan aufgenommene Abschnitte des Bügel-Grundkörpers 11 und somit auf die jeweils abgebildeten Zähne eindeutig einer Position bezüglich des Unterkiefers zuzuordnen.

Der Bügel-Grundkörper 11 ist als Formteil, etwa als Kunststoff-Spritzgussteil (etwa aus einem Polyamid oder ABS oder einem sonstigen physiologisch unbedenklichen Polymer) oder auch als Metall-Gussteil (etwa aus einer Aluminiumlegierung), hergestellt. Es kann sich auch um ein Kunststoff-Formteil mit eingelegter Metallarmierung oder um eine andere Art Formteil handeln. Das Formteil kann teilweise oder Insgesamt aus einem transparenten Material bestehen, welches es erlaubt, zugleich mit den Markierungen auf Zahnoberflächen aufzunehmen.

Das Messsensorik-Teil 15 ist in Fig. 3 lediglich symbolisch dargestellt; es kann eine (als solche bekannte) Anordnung von Sendern oder Sensoren oder Reflektoren eines Ultraschall-Positionsbestimmungssystems aufweisen.

## Patentansprüche

1. Zahnschiene (1) als Ausbildungsmittel für die Zahnmedizin und -technik, mit einer ersten, konkaven Oberfläche (1a), die an die Zahn (4)- und angrenzende Zahnfleischtopographie einer Träger-Person angepasst ist, und einer zweiten, konvexen Oberfläche (1b), in der mindestens Abschnitte einer Zahnoberflächen-Konfiguration (3) ausgebildet sind, die zum Zwecke der Diagnostik, Planung und Versorgung vorbestimmte Defekte aufweist.

2. Zahnschiene nach Anspruch 1, wobei in der zweiten Oberfläche schadhafte oder zerstörte Zähne und/oder Zahnfehlstellungen, wie etwa Lückenstände, Karies, Abbrüche, oder sonstige Anomalien nachgebildet sind.

3. Zahnschiene nach Anspruch 1 oder 2, wobei die zweite Oberfläche so ausgebildet ist, dass sie mindestens Anzeichen einer Kiefer-Fehlstellung bzw. Aufbissfehlstellung bei einer Dysgnathie oder craniomandibulären Dysfunktion der Träger-Person nachbildet.

4. Zahnschiene nach einem der vorangehenden Ansprüche, wobei auf der zweiten Oberfläche nur einzelne Zähne nachgebildet, insbesondere einem mit Dentalinstrumenten bzw. -geräten bearbeitbaren Material, wie etwa einem Hartkunststoff, einzeln gefertigt und auf einem Zahnschienen-Träger befestigt sind.

5. Zahnschiene nach einem der vorangehenden Ansprüche, ausgebildet als Unterkiefer-Schiene zur Fixierung auf dem Patienten-Unterkiefer, wobei die Zahnoberflächen-Konfiguration auf der zweiten Oberfläche auf Grundlage des totalen Zahnoberflächenprofils des Patienten-Unterkiefers konturiert ist.

6. Zahnschiene nach einem der Ansprüche 1 bis 4, ausgebildet als Oberkiefer-Schiene zur Fixierung auf dem Patienten-Oberkiefer, wobei die Zahnoberflächen-Konfiguration auf der zweiten Oberfläche auf Grundlage des totalen Zahnoberflächenprofils des Patienten-Oberkiefers konturiert ist.

7. Zahnschiene nach einem der vorangehenden Ansprüche, im Wesentlichen ausgebildet aus einem Hartkunststoff mit eingefrästen Zahnoberflächen-Konfigurationen auf der ersten und zweiten Oberfläche.

8. Zahnschiene nach einem der Ansprüche 1 bis 6, gefertigt aus einem verschmolzenen thermoplastischen Pulver oder Granulat oder lichthärtenden Flüssigpolymeren, wobei die Zahnoberflächen-Konfigurationen auf der ersten und zweiten Oberfläche durch additive Formgebung ausgebildet sind.

9. Zahnschiene nach einem der Ansprüche 1 bis 6, gefertigt aus einer thermoplastischen Folie, wobei die Zahnoberflächen-Konfigurationen auf der ersten und zweiten Oberfläche durch eine Druck-/Hitze-Formungsvorgang und optional mittels eines aufgesetzten, durch ein Fräsverfahren oder additive Formgebung gefertigten Anpassungselementes auf mindestens einer der ersten und zweiten Oberfläche gebildet sind.

10. Satz von Zahnschienen nach einem der vorangehenden Ansprüche, umfassend mindestens eine Unterkiefer-Schiene und eine Oberkiefer-Schiene, wobei die zweiten Oberflächen der Unterkiefer-Schiene und Oberkiefer-Schiene derart aufeinander abgestimmt konfiguriert sind, dass sie eine Kiefer-Fehlstellung bzw. craniomandibuläre Dysfunktion nachbilden.

11. Satz von Zahnschienen nach einem der Ansprüche 1 bis 9, umfassend mehrere Zahnschienen mit identischer erster, konkaver Oberfläche und unterschiedlichen zweiten, konvexen Oberflächen, in denen verschiedene vorbestimmte Defekte nachgebildet sind.

12. Verfahren zur Herstellung einer Zahnschiene (1) nach einem der Ansprüche 1 bis 9, wobei die Zahnoberflächen- und angrenzende Zahnfleischtopographie des Unterkiefers oder Oberkiefers der Träger-Person mittels eines intraoralen Scanners direkt eingescannt wird und mit dem Scan-Datensatz die konkave erste Oberfläche (1a) mittels eines abtragenden Bearbeitungsverfahrens, insbesondere eines Fräsverfahrens, aus einem Zahnschienen-Grundkörper herausgearbeitet oder mittels eines additiven Herstellungsverfahrens aus einem Materialpulver aufgebaut oder mittels eines Druck-/Hitze-Formungsvorganges einer thermoplastischen Folie geformt wird, und
wobei der Scan-Datensatz der Zahnoberflächen- und angrenzenden Zahnfleischtopographie einer Bearbeitung mit digitalisierten Daten vorbestimmter Defekte unterzogen und mit dem bearbeiteten Datensatz die konvexe zweite Oberfläche (1b) mittels des koordinatengesteuerten, abtragenden Bearbeitungsverfahrens aus dem Zahnschienen-Grundkörper herausgearbeitet oder in dem additiven Herstellungsverfahren aufgebaut oder in dem Druck-/Hitze-Formungsvorgang der thermoplastischen Folie aufgeprägt wird.

13. Verfahren zur Herstellung einer Zahnschiene (1) nach einem der Ansprüche 1 bis 9, wobei von der Zahnoberflächen- und angrenzenden Zahnfleischtopographie des Unterkiefers oder Oberkiefers der Träger-Person mittels einer mit einem Registrat gefüllten Bissgabel ein Zahnabdruckmodell gewonnen und das Zahnabdruckmodell eingescannt wird und mit dem Scan-Datensatz die konkave erste Oberfläche (1a) mittels eines abtragenden Bearbeitungsverfahrens, insbesondere eines Fräsverfahrens, aus einem Zahnschienen-Grundkörper herausgearbeitet oder mittels eines additiven Herstellungsverfahrens aus einem Materialpulver aufgebaut oder mittels eines Druck-/Hitze-Formungsvorganges einer thermoplastischen Folie geformt wird, und
wobei der Scan-Datensatz der Zahnoberflächen- und angrenzenden Zahnfleischtopographie einer Bearbeitung mit digitalisierten Daten vorbestimmter Defekte unterzogen und mit dem bearbeiteten Datensatz die konvexe zweite Oberfläche (1b) mittels des koordinatengesteuerten, abtragenden Bearbeitungsverfahrens aus dem Zahnschienen-Grundkörper herausgearbeitet oder in dem additiven Herstellungsverfahren aufgebaut oder in dem Druck-/Hitze- Formungsvorgang der thermoplastischen Folie aufgeprägt wird.

14. Verfahren nach Anspruch 12 oder 13, wobei mittels eines Positionsbestimmungssystems eine Lagebeziehung zwischen Unterkiefer und Oberkiefer der Träger-Person ermittelt und der Scan-Datensatz der Zahnoberflächen- und angrenzenden Zahnfleischtopographie einer Bearbeitung mit den Daten des Positionsbestimmungssystems unterzogen und die Ausbildung der konvexen zweiten Oberfläche aufgrund des bearbeiteten Datensatzes derart ausgeführt wird, dass diese Anzeichen einer Kiefer-Fehlstellung oder craniomandibulären Dysfunktion nachbildet.

15. Verfahren zur Herstellung eines Zahnschienen-Satzes nach Anspruch 10 mit einem Verfahren nach Anspruch 12 oder 13, wobei Scan-Datensätze des Unterkiefers und Oberkiefers der Träger-Person aufgenommen und beide Scan-Datensätze einer Bearbeitung mit den Daten des Positionsbestimmungssystems unterzogen und die jeweiligen bearbeiteten Datensätze zur Ausbildung der jeweiligen zweiten Oberfläche der Unterkiefer-Zahnschiene und Oberkiefer-Zahnschiene benutzt werden, wobei die zweiten Oberflächen derart ausgebildet werden, dass sie in Kombination miteinander eine Kieferfehlstellung bzw. Aufbissfehlstellung bei einer Dysgnathie oder craniomandibulären Dysfunktion simulieren.

## Claims

1. A dental splint (1) as an training tool for dentistry and dental technology, having a first, concave surface (1a) adapted to the teeth (4) and adjacent gingival topography of a wearer, and a second, convex surface (1b) having formed therein at least portions of a tooth surface configuration (3) having predetermined defects for the purpose of diagnosis, planning and restoration.

2. The dental splint of claim 1, wherein damaged or destroyed teeth and/or tooth malpositions, such as gaps, caries, fractures, or other abnormalities are replicated in the second surface.

3. The dental splint of claim 1 or 2, wherein the second surface is configured to at least mimic signs of jaw malposition or dental malposition in a dysgnathia or craniomandibular dysfunction of the wearer.

4. The dental splint according to one of the preceding claims, wherein only individual teeth are reproduced on the second surface, in particular are manufactured individually from a material which can be processed with dental instruments or devices, such as a hard plastic and are fastened to a dental splint carrier.

5. The dental splint according to any one of the preceding claims, formed as a mandibular splint for fixation on the patient's mandible, wherein the tooth surface configuration on the second surface is contoured based on the total tooth surface profile of the patient's mandible.

6. The dental splint according to any one of claims 1 to 4, formed as a maxillary splint for fixation on the patient's maxilla, wherein the tooth surface configuration on the second surface is contoured based on the total surface profile of the patient's maxilla.

7. The dental splint according to any one of the preceding claims, formed substantially of a hard plastic material having milled tooth surface configurations on the first and second surfaces.

8. The dental splint according to any one of claims 1 to 6, made of a fused thermoplastic powder or granules or light-curing liquid polymers, wherein the tooth surface configurations on the first and second surfaces are formed by additive molding.

9. The dental splint according to any one of claims 1 to 6, made of a thermoplastic sheet, wherein the tooth surface configurations on the first and second surfaces are formed by a pressure/heat molding process and optionally by means of an attached conforming element fabricated by a milling process or additive molding on at least one of the first and second surfaces.

10. A set of dental splints according to any one of the preceding claims,
comprising at least a mandibular splint and a maxillary splint, wherein the second surfaces of the mandibular splint and maxillary splint are configured in such a way that they simulate a jaw malposition or craniomandibular dysfunction.

11. A set of dental splints according to any one of claims 1 to 9, comprising a plurality of dental splints having identical first concave surfaces and different second convex surfaces in which different predetermined defects are replicated.

12. A method of manufacturing a dental splint (1) according to any one of claims 1 to 9, wherein the tooth surface and adjacent gingival topography of the lower jaw or upper jaw of the wearer is directly scanned by means of an intraoral scanner and the scan data set is used to produce the concave first surface (1a) out of a dental split base body using a machining process, in particular a milling process, or from a material powder using an additive manufacturing process or from a thermoplastic film subjected to a pressure/heat forming process, wherein the scan data set of the tooth surface and adjacent gingival topography is subjected to processing with digitized data of predetermined defects and with the processed data set the convex second surface (1b) is machined out of the dental splint base body by means of the coordinate-controlled, ablative machining process or in the additive manufacturing process or imprinted on the thermoplastic film in the pressure/heat molding process.

13. A method of manufacturing a dental splint (1) according to any one of claims 1 to 9, wherein from the tooth surface and adjacent gingival topography of the lower jaw or upper jaw of the carrier person, a dental impression model is obtained by means of a dental fork or coupling bucket filled with a registration material, and the dental impression model is scanned, and the concave first surface (1a) is machined out of a dental splint base body with the scan data set by means of an ablative machining process, in particular a milling process or built up from a material powder by means of an additive manufacturing process or formed by means of a pressure/heat molding process of a thermoplastic film, wherein the scan data set of the tooth surface and adjacent gingival topography is subjected to processing with digitized data of predetermined defects and with the processed data set the convex second surface (1b) is machined out of the dental splint base body by means of the coordinate-controlled, ablative machining process or in the additive manufacturing process or imprinted on the thermoplastic film in the pressure/heat molding process.

14. The manufacturing method according to claim 12 or 13, wherein by means of a position determination system a positional relationship between the lower jaw and upper jaw of the wearer are determined and the scan data set of the tooth surface and adjacent gingival topography is processed with the position determination system data and the formation of the convex second surface based on the processed data set. is performed in such a way that these signs of jaw malalignment or craniomandibular dysfunction.

15. A method manufacturing a dental splint set according to claim 10 comprising a method according to claim 12 or 13, wherein scan data sets of the lower jaw and upper jaw of the wearer person are taken and both scan data sets are subjected to a processing with the data of the position determination system and the respective processed data sets are used to form the respective second surface of the mandibular dental splint and maxillary dental splint, wherein the second surfaces are formed in such a way that, in combination with each other, they form a jaw malposition or occlusal malposition, respectively simulate a dysgnathia or craniomandibular dysfunction.

## Revendications

1. Attelle dentaire (1) utilisée en tant qu'auxiliaire de réalisation pour la dentisterie et la prosthodontique, comprenant une première surface concave (1a) adaptée à la topographie dentaire (4) et de la gencive adjacente d'un porteur, et une seconde surface convexe (1b) dans laquelle sont réalisées au moins des parties d'une configuration de surface dentaire (3) présentant des défauts prédéterminés à des fins de diagnostic, de planification et de fourniture de soins.

2. Attelle dentaire selon la revendication 1, des dents défectueuses ou détruites et/ou des défauts de positionnement des dents, tels que des écarts, des caries, des cassures ou d'autres anomalies, étant reproduits dans la seconde surface.

3. Attelle dentaire selon la revendication 1 ou 2, la seconde surface étant réalisée pour reproduire au moins des signes d'une mauvaise position de la mâchoire ou une mauvaise position de l'occlusion en cas de dysgnathie ou de dysfonctionnement cranio-mandibulaire du porteur.

4. Attelle dentaire selon l'une des revendications précédentes, seules des dents individuelles étant reproduites sur la seconde surface, en particulier fabriquées individuellement dans un matériau traitable avec des instruments ou appareils dentaires, comme par exemple une matière plastique dure, et fixées sur un support d'attelle dentaire.

5. Attelle dentaire selon l'une des revendications précédentes, réalisée sous la forme d'une attelle de mâchoire inférieure pour être fixée sur la mâchoire inférieure du patient, la configuration de la surface dentaire sur la seconde surface étant profilée sur la base du profil de surface dentaire total de la mâchoire inférieure du patient.

6. Attelle dentaire selon l'une des revendications 1 à 4, réalisée sous la forme d'une attelle de mâchoire supérieure pour être fixée sur la mâchoire supérieure du patient, la configuration de la surface dentaire sur la seconde surface étant profilée sur la base du profil de surface dentaire total de la mâchoire supérieure du patient.

7. Attelle dentaire selon l'une des revendications précédentes, réalisée essentiellement sous la forme d'une matière plastique dure ayant des configurations de surfaces dentaires fraisées sur les première et seconde surfaces.

8. Attelle dentaire selon l'une des revendications 1 à 6, fabriquée à partir d'une poudre ou de granulés thermoplastiques fusionnés ou de polymères liquides photopolymérisables, les configurations de surfaces dentaires étant réalisées sur la première et la seconde surface par moulage additif.

9. Attelle dentaire selon l'une des revendications 1 à 6, fabriquée à partir d'un film thermoplastique, les configurations de surfaces dentaires sur les première et seconde surfaces étant formées par une opération de moulage par pression/chaleur et, facultativement, par un élément d'adaptation rapporté fabriqué par un procédé de fraisage ou un moulage additif sur au moins une des première et seconde surfaces.

10. Ensemble d'attelles dentaires selon l'une des revendications précédentes, comprenant au moins une attelle de mâchoire inférieure et une attelle de mâchoire supérieure, les secondes surfaces d'attelle de mâchoire inférieure et d'attelle de mâchoire supérieure étant configurées de manière à reproduire une mauvaise position de la mâchoire ou à un dysfonctionnement cranio-mandibulaire.

11. Ensemble d'attelles dentaires selon l'une des revendications 1 à 9, comprenant plusieurs attelles dentaires ayant une première surface concave identique et des secondes surfaces convexes différentes, dans lesquelles différents défauts prédéterminés sont reproduits.

12. Procédé de fabrication d'une attelle dentaire (1) selon l'une des revendications 1 à 9, la topographie de la surface dentaire et de la gencive adjacente de la mâchoire inférieure ou de la mâchoire supérieure du porteur étant scannée directement au moyen d'un scanner intra-oral et avec l'ensemble de données de scannage, la première surface concave (1a) étant obtenue à partir d'un corps de base d'attelle dentaire au moyen d'un procédé d'usinage abrasif, en particulier d'un procédé de fraisage, ou étant construite à partir d'une poudre de matériau au moyen d'un procédé de fabrication additive ou étant formée au moyen d'une opération de moulage par pression/chaleur d'un film thermoplastique, et
l'ensemble de données de scannage de la topographie de la surface dentaire et de la gencive adjacente étant soumis à un traitement avec des données numérisées présentant des défauts prédéterminés et, avec l'ensemble de données traité, la seconde surface convexe (1b) étant obtenue à partir du corps de base d'attelle dentaire au moyen du procédé d'usinage abrasif commandé par les coordonnées ou étant construite dans le procédé de fabrication additive ou appliquée sur le film thermoplastique dans l'opération de moulage par pression/chaleur.

13. Procédé de fabrication d'une attelle dentaire (1) selon l'une des revendications 1 à 9, un modèle d'empreinte dentaire étant obtenu à partir de la topographie de la surface dentaire et de la gencive adjacente de la mâchoire inférieure ou de la mâchoire supérieure du porteur au moyen d'une fourchette d'occlusion remplie d'un enregistrement, et le modèle d'empreinte dentaire étant scanné et avec l'ensemble de données de scannage, la première surface concave (1a) étant obtenue à partir d'un corps de base d'attelle dentaire au moyen d'un procédé d'usinage abrasif, en particulier d'un procédé de fraisage, ou étant construite à partir d'une poudre de matériau au moyen d'un procédé de fabrication additive ou étant formée au moyen d'une opération de moulage par pression/chaleur d'un film thermoplastique, et l'ensemble de données de scannage de la topographie de la surface dentaire et de la gencive adjacente étant soumis à un traitement avec des données numérisées présentant des défauts prédéterminés et, avec l'ensemble de données traité, la seconde surface convexe (1b) étant obtenue à partir du corps de base d'attelle dentaire au moyen du procédé d'usinage abrasif commandé par les coordonnées ou étant construite dans le procédé de fabrication additive ou appliquée sur le film thermoplastique dans l'opération de moulage par pression/chaleur.

14. Procédé selon la revendication 12 ou 13, une relation de position entre la mâchoire inférieure et la mâchoire supérieure du porteur étant déterminée au moyen d'un système de détermination de position et l'ensemble de données de scannage de la topographie de la surface dentaire et de la gencive adjacente étant soumis à un traitement avec les données du système de détermination de position et la réalisation de la seconde surface convexe étant exécutée sur la base de l'ensemble de données traité de telle sorte que celle-ci reproduise des signes d'une mauvaise position de la mâchoire ou d'un dysfonctionnement cranio-mandibulaire.

15. Procédé de fabrication d'un ensemble d'attelles dentaires selon la revendication 10, comprenant un procédé selon la revendication 12 ou 13, des ensembles de données de scannage de la mâchoire inférieure et de la mâchoire supérieure du porteur étant enregistrés et les deux ensembles de données de scannage étant soumis à un traitement avec les données du système de détermination de position, et les ensembles de données traités respectifs étant utilisés pour la réalisation de la seconde surface respective de l'attelle dentaire de la mâchoire inférieure et de l'attelle dentaire de la mâchoire supérieure, les secondes surfaces étant réalisées de telle sorte qu'elles simulent, en combinaison l'une avec l'autre, une mauvaise position de la mâchoire ou une mauvaise position de l'occlusion en cas de dysgnathie ou de dysfonctionnement cranio-mandibulaire.
